# FASCICULE DE BREVET EUROPEEN

(11) **EP 2 603 071 B1**
(45) Date de publication et mention de la délivrance du brevet: **15.10.2014**
(21) Numéro de dépôt: 11735884.6
(22) Date de dépôt: 27.07.2011
(51) Int. Cl.: A01K 11/00

(54) **DISPOSITIF RESINE D'IDENTIFICATION D'UN ANIMAL, ET PROCEDE DE FABRICATION CORRESPONDANT**
HARZTIERIDENTIFIKATIONSVORRICHTUNG UND HERSTELLUNGSVERFAHREN DAFÜR
RESIN DEVICE FOR ANIMAL IDENTIFICATION AND PROCESS FOR ITS FABRICATION

(30) Priorité: 13.08.2010 FR 1056600
(43) Date de publication de la demande: 19.06.2013
(73) Titulaire: Allflex Europe, 35500 Vitré (FR)
(72) Inventeur: DECALUWE, Johan, F-53000 Laval (FR); HILPERT, Jean-Jacques, F-35500 Vitre (FR); LEMAIRE, Emmanuel, F-02390 Mont D'origny (FR)
(74) Mandataire: Milon, Marie-Anne
(86) Numéro de dépôt international: PCT/EP2011/062896
(87) Numéro de publication internationale: WO 2012/019911

(56) Documents cités:
- WO-A2-2006/045162
- US-A1- 2002 066 418

## Description

Le domaine de l'invention est de l'identification et du marquage des animaux, et plus précisément des dispositifs, ou boucles, de marquage (également connues sous la désignation anglaise « tags »). Plus précisément, l'invention concerne de telles boucles munies de moyens d'identification électroniques, appelées par la suite boucles électroniques.

Le marquage pour l'identification des animaux est connu depuis longtemps, et obligatoire dans de nombreux pays, de façon à permettre notamment la traçabilité et la certification de l'origine des animaux. Cette approche peut s'appliquer aux bovins, ovins, porcins, caprins, volailles, et plus généralement à toute espèce animale pour laquelle un marquage est nécessaire ou souhaitable.

A titre d'exemple, le règlement européen numéro 1760/2000 impose que tous les bovins soient identifiés à l'aide d'une boucle sur chacune de leurs oreilles. Ces boucles doivent porter un numéro d'identification unique, qui permet l'identification de l'animal, et par exemple de la connaissance de la ferme dans laquelle il est né.

Dans le cas des boucles électroniques, cet identifiant unique (ou un autre identifiant) est également mémorisé, de façon à pouvoir être lu, à distance, à l'aide d'un lecteur prévu à cet effet, par exemple et selon la technique RFID.

Un moyen d'identification se compose classiquement de deux parties, une partie mâle et une partie femelle, destinées à être assemblées de façon irréversible, par exemple sur l'oreille d'un animal. La partie mâle comprend à cet effet une pointe, apte à traverser l'oreille de l'animal, et à venir se loger dans un réceptacle correspondant de la partie femelle, appelé tête ou chapeau. Cette solidarisation doit bien sûr être irréversible, pour empêcher toute tentative de fraude, et notamment toute modification du numéro d'identification sur l'animal.

Malgré la simplicité apparente de ces boucles, leur fabrication est relativement complexe, du fait du nombre important de contraintes qu'elles doivent respecter. Tout d'abord, comme mentionné ci-dessus, il ne doit pas être possible de séparer l'élément mâle de l'élément femelle, une fois qu'elles ont été assemblées avec une pince prévue à cet effet. Il ne faut pas non plus que l'on puisse démonter la partie contenant les moyens électroniques d'identification.

La durée de vie d'une boucle est classiquement de plusieurs mois, voire plusieurs années, et celle-ci doit bien sûr rester opérationnelle pendant toute cette période correspondant à la durée de vie de l'animal. Ceci signifie que le marquage doit rester lisible, et non modifiable, et que les moyens électroniques ne doivent pas être détériorés, par exemple par des attaques chimiques, dues par exemple à l'humidité, ou à la présence de produits particuliers. Ces aspects sont d'autant plus importants que l'animal peut vivre au moins une partie du temps en plein air, et soumettre la boucle à différentes agressions (humidité, frottement, accrochage dans des branches, des clôtures, ...).

Par ailleurs, il convient de prendre en compte le confort et la santé de l'animal. La boucle doit donc occasionner le moins de gêne possible, et donc être légère et faiblement encombrante. Il ne faut pas non plus, autant que possible, que l'animal puisse se blesser si la boucle s'accroche, par exemple dans des branches ou une clôture. Enfin, il est important que la cicatrisation, après mise en place de la boucle, se fasse de façon rapide et efficace, et éviter autant que faire se peut les risques d'infection.

Le document US2002/066418 divulgue un dispositif d'identification d'un animal, comprenant une partie mâle et une partie femelle destinées à être assemblées l'une à l'autre, ladite partie femelle comprenant une tête de réception d'une pointe de ladite partie mâle, et une coque rigide contenant des moyens électroniques d'identification, le dispositif comprenant une résine placée à l'intérieur d'un logement défini dans ladite coque, de façon à recouvrir lesdits moyens électroniques.

L'invention a notamment pour objectif de fournir un nouveau type de boucle électronique et un nouveau procédé de fabrication correspondant, répondant à au moins une partie de ces exigences.

Pour cela, l'invention propose un dispositif d'identification d'un animal, comprenant une partie mâle et une partie femelle destinée à être assemblées l'une à l'autre, ladite partie femelle comprenant une tête de réception d'une pointe de ladite partie mâle, et une coque rigide contenant des moyens électroniques d'identification.

Selon l'invention, une résine est placée à l'intérieur d'un logement défini dans ladite coque, de façon à recouvrir lesdits moyens électroniques et à solidariser ladite tête et ladite coque.

Cette résine assure ainsi une double fonction, d'une part de protection des moyens électroniques contre les agressions chimiques, et d'autre part de solidarisation de la coque et du chapeau, ce qui permet de s'affranchir de la présence de moyens mécaniques, tels que des moyens de clippage.

Avantageusement, ladite partie femelle comprend également un élément de protection s'étendant au moins sur une couronne centrée sur la base de ladite tête, et recouvrant ladite résine.

Ainsi, la résine est recouverte par cet élément de protection. Cette résine assure la solidarisation de celui-ci aux autres éléments de la coque.

Notamment, ladite coque présentant une surface inférieure, destinée à venir au moins partiellement en contact avec la peau de l'animal, et une surface supérieure, à partir de laquelle s'étend ladite tête, et un pourtour reliant lesdites surfaces inférieure et supérieure, ledit élément de protection peut recouvrir ladite partie supérieure et ledit pourtour.

La protection de la coque est ainsi assurée de façon efficace.

Pour assurer une solidarisation efficace de l'élément de protection sur le pourtour, la périphérie de ladite partie inférieure peut définir un pan coupé, qui est recouvert par ledit élément de protection.

Ledit élément de protection peut notamment être réalisé en polyuréthane, et porter un marquage d'identification dudit animal.

Selon un autre aspect, ladite tête peut porter au moins un élément s'étendant sensiblement perpendiculairement à l'axe de pénétration de ladite partie mâle dans ladite tête, destinée à être noyé dans ladite résine.

Ceci permet d'améliorer la qualité de la solidarisation.

Selon une caractéristique particulière, la surface inférieure de ladite coque présente trois portions concentriques principales :
- une ouverture permettant le passage d'une pointe d'une partie mâle vers ladite tête ;
- une première portion de surface s'étendant autour de ladite ouverture, destinée à venir au moins partiellement en contact avec la peau de l'animal ;
- une deuxième portion de surface s'étendant autour de la première surface, et éloignée de celle-ci de façon à ne pas venir en contact permanent avec la peau de l'animal.

On limite ainsi la surface de contact avec l'oreille, ce qui permet de favoriser la cicatrisation.

Ladite tête est de préférence réalisée dans un matériau rigide, et de façon qu'elle casse en cas de tentative de séparation de la partie femelle et de la partie mâle. Il en est de même, préférentiellement, pour ladite coque.

En particulier, ladite tête et/ou ladite coque peuvent être réalisées dans des matériaux appartenant au groupe comprenant le polyamide, notamment le polyamide 66, et l'acrylonitrile styrène acrylate (ASA).

Selon une autre caractéristique particulière, ladite tête présente au moins une ouverture d'aération. Ceci permet de favoriser la cicatrisation.

La zone d'entrée de la pointe de la partie mâle, définie dans ladite coque, peut avantageusement être un alésage comprenant une première portion tronconique, suivie d'une portion cylindrique.

Notamment, ladite partie mâle comprend une base et un fût perpendiculaire à ladite base, portant une pointe, l'angle défini par ladite pointe est préférentiellement proche de, mais inférieur à, l'angle de ladite portion tronconique.

La longueur de ladite partie mâle peut être définie de façon à obtenir une côte libre disponible, pour l'oreille de l'animal, après assemblage de la partie mâle et de la partie femelle, de l'ordre de 10 à 13 mm.

L'invention concerne également un procédé de fabrication d'un dispositif tel que décrit ci-dessus, la fabrication de la partie femelle comprenant les étapes suivantes :
- obtention de ladite coque ;
- mise en place, sur ladite coque, de ladite tête ;
- mise en place, sur ladite coque, desdits moyens électroniques ;
- dépôt de ladite résine, de façon à recouvrir lesdits moyens électroniques et solidariser ladite coque et ladite tête.

Préférentiellement, ce procédé comprend en outre une étape de :
- mise en place d'une surface de protection sur la résine et/ou le pourtour de ladite coque.

D'autres caractéristiques et avantages de l'invention apparaîtront à la lecture suivante de la description d'un mode de réalisation préférentiel, donné à titre illustratif et non limitatif, et des dessins annexés, parmi lesquels :
- les figures 1 et 2 présentent la partie femelle d'un dispositif selon l'invention, respectivement vue de dessus et vue de dessous, en perspective (pour les besoins de la description, on appelle dessus de la partie femelle la partie portant la tête, ou chapeau) ;
- la figure 3 est une vue de côté de la partie femelle des figures 1 et 2 ;
- la figure 4 est une vue en section de la figure 3 ;
- la figure 5 montre l'emplacement la section de la figure 4 ;
- la figure 6 présente, en section, la partie mâle et la partie femelle en cours d'assemblage ;
- la figure 7 présente, en coupe, la partie mâle et la partie femelle de la figure 6, une fois assemblée ;
- les figures 8 et 9 illustrent les moyens de réception des moyens électroniques, ceux-ci étant absents (figure 8) ou présents (figure 9) ;
- la figure 10 décrit schématiquement un procédé de fabrication de la partie femelle d'une boucle selon les figures 1 à 9.

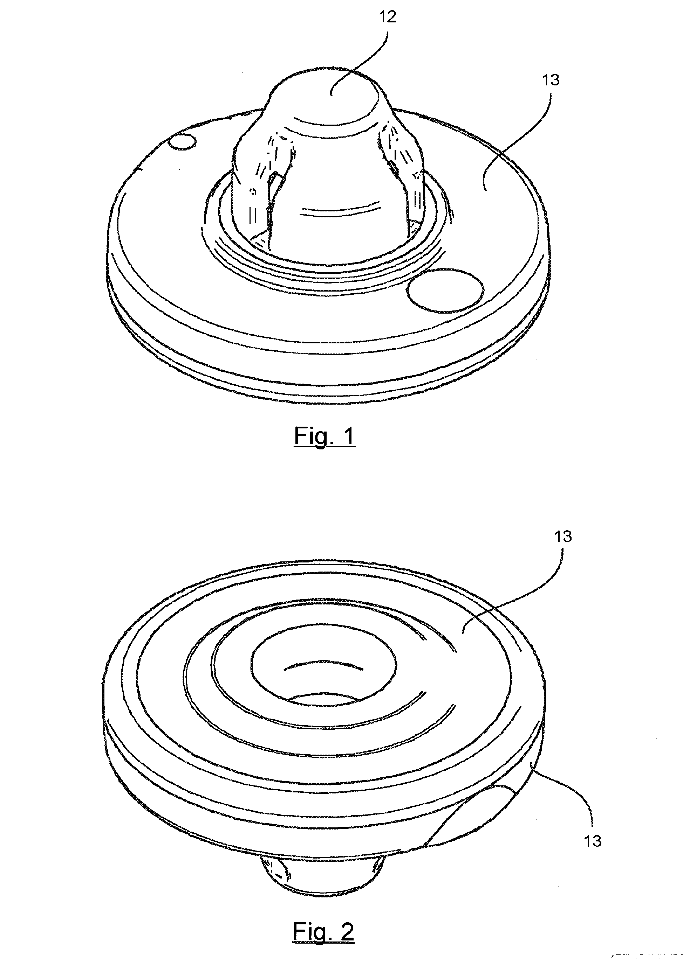

Le mode de réalisation décrit ci-après concerne une boucle destinée notamment à équiper des ovins. Comme on le voit sur les figures 1 et 2, la partie femelle est très compacte, et peu encombrante. En fonction des matériaux utilisés, elle peut présenter un poids inférieur à 3g, par exemple de l'ordre de 2,6 g.

Cette partie femelle est constituée de trois éléments principaux :
- une coque rigide 11 ;
- une tête, ou chapeau, également rigide 12 ;
- une surface de marquage et de protection 13 réalisée dans un matériau plus souple et typiquement du polyuréthane (élastomère).

Comme on le verra plus précisément par la suite, la coque 11 est adaptée pour recevoir les moyens électroniques d'identification.

Comme déjà mentionné, il est bien sûr essentiel que le marquage, réalisé sur la surface 131, présente une très bonne tenue dans le plan, et en particulier une bonne résistance face aux agressions extérieures. Dans ce cadre, la matière polyuréthane apparaît, à l'heure actuelle, quasiment incontournable pour satisfaire aux exigences d'abrasion.

En revanche, la tête 12 doit être réalisée dans un matériau rigide, qui se casse, ou se brise, en cas de tentative de fraude. Dans le mode de réalisation décrit, cette tête est réalisée en polyamide 66.

Du fait des avantages du polyuréthane, on pourrait imaginer que la coque 11 soit réalisée dans cette matière, et soit réalisée de façon monobloc avec la surface de marquage. Toutefois, la flexibilité de cette matière est un frein à la bonne tenue des boucles. En conséquence, il est nécessaire de prévoir une coque 11, qui soit réalisée dans un matériau rigide. Dans le mode de réalisation illustré, ce matériau est de l'acrylonitrile styrène acrylate (ASA). Ce matériau rigide permet d'obtenir une meilleure tenue. En revanche, il n'est pas compatible, en surmoulage, avec le polyuréthane. Pourtant, il est nécessaire, comme déjà expliqué, que les différents composants de la partie femelle soient solidarisés de façon irréversible (sauf à détruire, ou à tout le moins détériorer, la boucle).

Le surmoulage n'étant pas possible, on pourrait envisager une solidarisation mécanique, par exemple via des moyens de clippage. Cependant, cette approche suppose des formes de dimensions conséquentes qui ne seraient pas adaptées à une boucle dont le poids doit être le plus faible possible, notamment dans le cadre de l'identification ovine. Dans le cas contraire, l'oreille de l'agneau pourrait être abîmée.

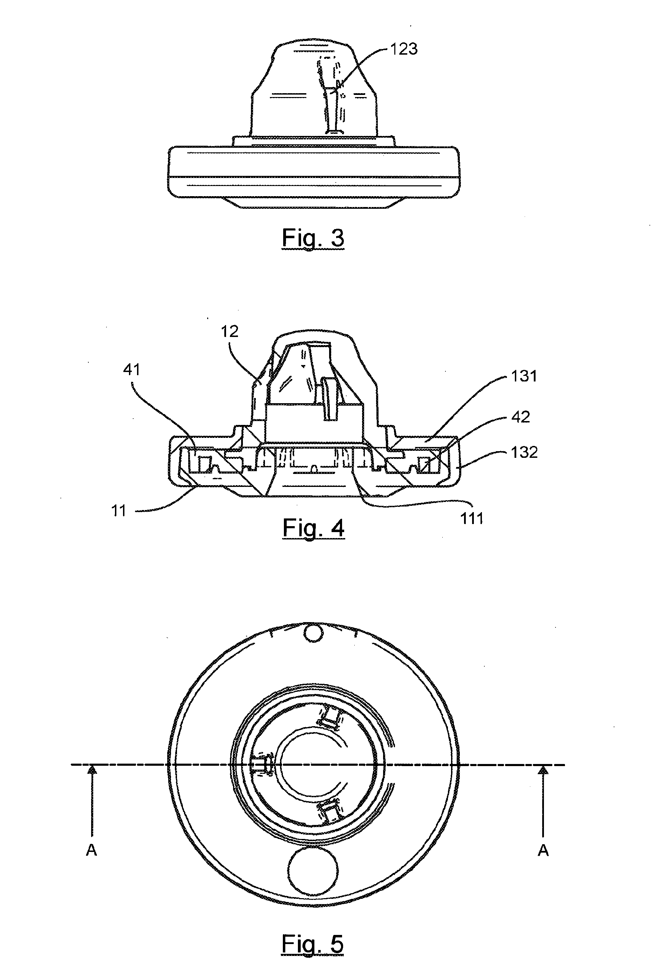

Selon l'invention, la solidarisation des trois éléments 11, 12 et 13 est donc assurée par une résine 41, comme cela apparaît sur la vue en section A-A de la figure 4. Cette résine 41 assure la solidarisation par collage.

Cette résine 41 recouvre par ailleurs les moyens électroniques 42, qui peuvent notamment comprendre un toron d'un conducteur électrique, formant antenne, et un élément de stockage du numéro d'identification. Ainsi, cette résine 41 immobilise les moyens électroniques 42 à l'intérieur de la coque 11, et les protège contre les agressions chimiques.

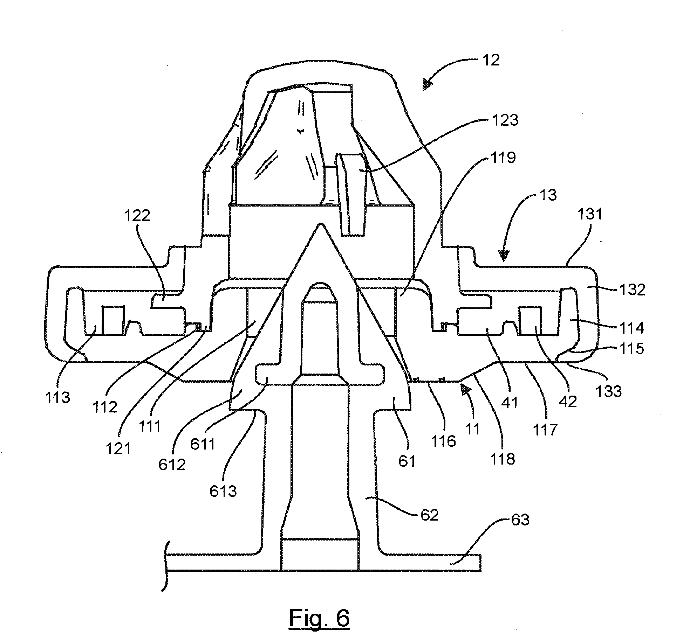

Comme on le voit sur cette figure 4, ainsi que sur la figure 6, les pièces 11, 12 et 13 présentent plusieurs particularités destinées à faciliter leur assemblage et leur solidarisation. Bien sûr, selon d'autres modes de réalisation, ces moyens peuvent être différents, voire supprimés.

Ainsi, le socle 11 comprend une partie centrale 111, qui est une ouverture destinée à recevoir la pointe de la partie mâle.

En partant du centre du socle 11, défini par l'axe central de la pièce (dans le mode réalisation illustré, la partie femelle présente une symétrie de révolution, avantageuse pour le montage et limitant les risques d'accrochage de la boucle, une fois installée sur l'oreille. Toutefois, bien sûr, d'autres formes, rectangulaires, ovales ou quelconques, peuvent être envisagées). On a prévu une première gorge 112, apte à recevoir une couronne inférieure 121 de la tête 12. Ceci permet de placer aisément la tête 12 sur le socle et de la maintenir dans la position adéquate, le temps de l'assemblage à l'aide de la résine 41.

La tête 12 présente également une collerette 122 s'étendant perpendiculairement à l'axe de révolution de la partie femelle, et permettant d'augmenter la surface de contact avec la résine 41, et donc l'efficacité de la solidarisation.

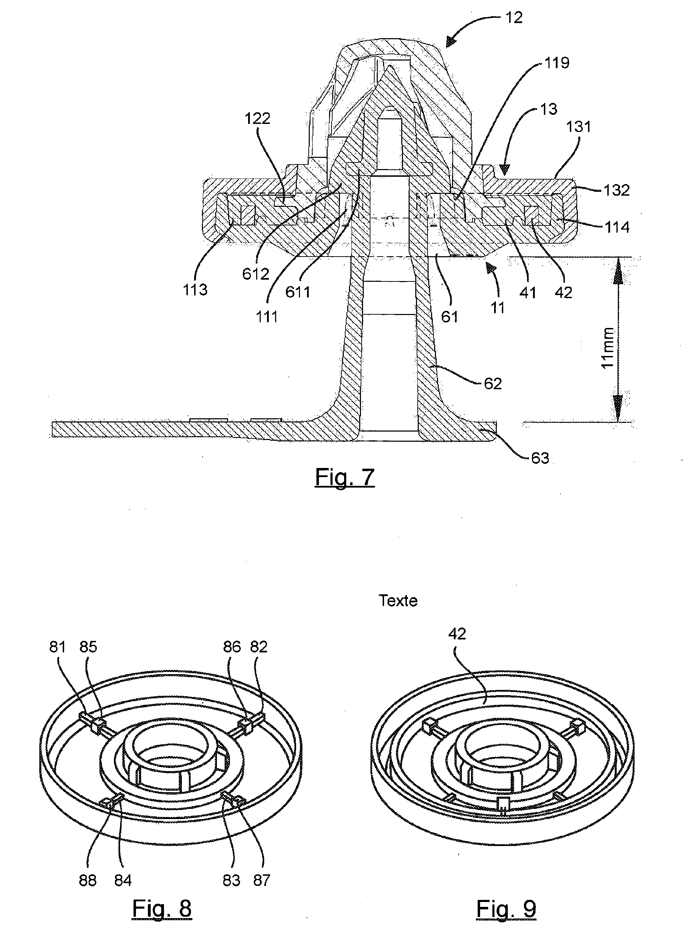

Le socle 11 comprend également une zone de réception des moyens électroniques 42, plus précisément illustrés par les figures 8 et 9. Comme ceci apparaît sur ces figures, les moyens de réception sont, dans ce mode de réalisation, constitués de quatre éléments de faible largeur, tels que des nervures 81 à 84, formant support pour les moyens électroniques 42. Ainsi, la résine 41 s'étend également sous ces moyens électroniques, de façon qu'ils soient intégralement, ou quasi intégralement, entourés et recouverts par cette résine, qui assure la protection chimique.

Ces nervures portent des ergots 85 à 88, maintenant ces moyens électroniques dans la position souhaitée.

L'élément 13 vient recouvrir la partie supérieure de la résine 41, pour définir la surface de marquage 131.

Elle s'étend également, par une portion 132, le long du pourtour 114 de la coque 11, de façon à protéger ce pourtour contre l'usure. Pour assurer une solidarisation efficace, la partie inférieure du pourtour 114 présente un pan coupé 115, sur lequel la partie terminale 133 de l'élément en polyuréthane vient s'accrocher. Cette partie 133 se place dans le prolongement de la surface inférieure du socle 11, pour supprimer toute aspérité.

Cette partie inférieure de la coque (voir figure 2) présente 3 zones concentriques principales :
- l'ouverture 111, décrite ci-après ;
- une première surface 116, destinée à venir en contact avec l'oreille de l'animal ;
- une seconde surface 117, parallèle à la première surface 116, mais éloignée de l'oreille de l'animal.

Les deux surfaces 116 et 117 sont reliées par un pan coupé 118. Ainsi, la surface en contact avec l'oreille de l'animal est réduite. On limite de cette façon la zone de contact et l'appui sur l'oreille, et on favorise la cicatrisation.

L'ouverture 111 présente deux portions successives :
- une première portion 1111 tronconique ;
- une seconde portion 1112 cylindrique.

La portion tronconique 1111 est conçue pour coopérer avec la pointe 61 de la partie mâle, de façon que le contact entre cette pointe et l'ouverture se fasse suivant un cercle, qui permet d'assurer un effet « emporte-pièce », permettant une pose sans déchirure de l'oreille.

Pour cela, l'angle α₁ d'ouverture de la partie tronconique 1111 avec l'axe de révolution est légèrement supérieur à l'angle α₂ formé par la pointe 61 avec le même axe.

Classiquement, la partie mâle comprend donc une pointe 61, montée sur un fut 62, s'étendant à partir d'une base 63, parallèle au socle 11, lorsque la boucle est assemblée, et s'étendant de l'autre coté de l'oreille, de façon à assurer la solidarisation.

La longueur du fût 62 est choisie de façon à permettre une bonne aération de la cicatrice, tout en limitant les possibilités d'accrochage dans les moyens d'élevage (ficelles, chaînes, cornadis, boxes, ...) ou avec les autres animaux.

Cette valeur est adaptée de façon à obtenir une côte libre disponible, après assemblage de la partie mâle et de la partie femelle, pour l'oreille de l'animal, de l'ordre de 10 à 13 mm, par exemple 11 mm, comme illustré par la figure 9, qui montre, en coupe, les parties mâle et femelles assemblées.

La pointe 61 est constituée d'une première partie métallique, plastique (par exemple PA6 - PA66 - PU), ou tout autre matériau ou alliage suffisamment dur (laiton, zamak, ...) 611, permettant de percer l'oreille, et d'une seconde partie 612, en matière plastique, par exemple en polyuréthane, formée de façon monobloc avec le fût 62 et la base 63.

La pointe 61 est conçue pour pénétrer par l'ouverture 111, jusqu'à l'intérieur de la tête 12. Une pince adaptée permet d'appliquer la force nécessaire pour assurer la pénétration. Une fois celle-ci effectuée, il n'est plus possible de désolidariser la partie mâle de la partie femelle, la base 613 de la pointe venant en appui sur les surfaces 119 prévues à cet effet dans la coque 11, à la périphérie de la partie cylindrique 1112 de l'ouverture 111. De façon connue, on peut prévoir des ailettes s'écartant au passage de la pointe, puis venant ensuite prendre position en contact avec la base de la pointe 613.

La tête 13 présente avantageusement une ou plusieurs fentes d'aération 131, permettant la circulation de l'air à l'intérieur du réceptacle femelle.

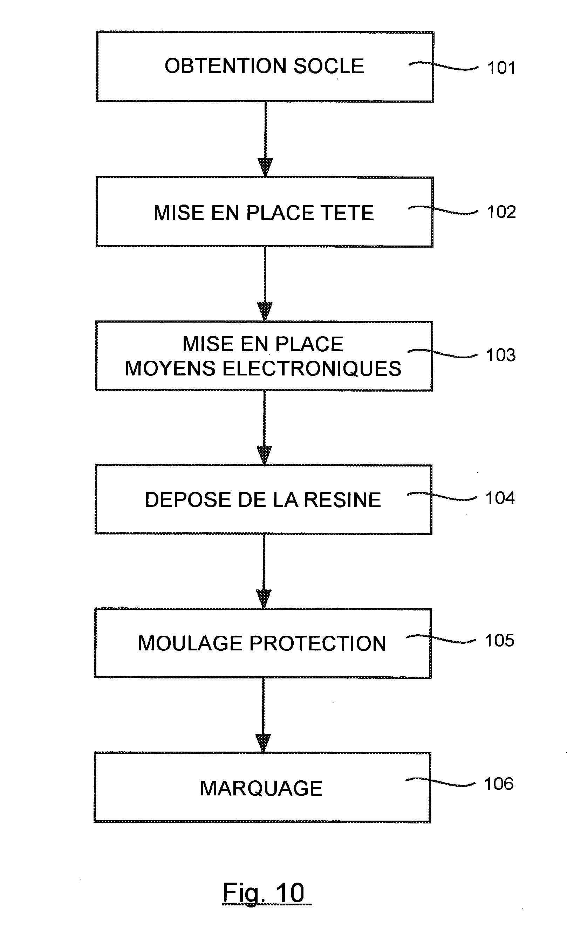

L'invention concerne également un procédé de fabrication de boucles d'identification telles que décrites ci-dessus, et en particulier de la partie femelle. La figure 10 illustre schématiquement ce procédé.

Dans une première étape (101), on obtient tout d'abord le socle 11, par un moulage adapté.

On met en place (102) la tête 12 sur ce socle 11, en introduisant la couronne 121 dans la gorge 112. On met également en place (103), dans la gorge 113, les moyens électroniques 42. Les deux étapes 102 et 103 peuvent être effectuées dans l'ordre opposé, ou simultanément.

On dépose ensuite la résine 41, qui vient ainsi recouvrir les moyens électroniques 42, et donc assurer une étanchéité contre les agressions chimiques, et solidariser le socle 11 et la tête 12.

Ensuite, on rapporte (105) la surface de marquage 13 polyuréthane, de façon qu'elle s'étende sur la surface supérieure de la résine 41, et sur le pourtour 114 du socle 11.

Enfin, dans une dernière étape 106, on applique un marquage sur la surface 131, par exemple à l'aide d'un laser.

## Revendications

1. Dispositif d'identification d'un animal, comprenant une partie mâle et une partie femelle destinée à être assemblées l'une à l'autre,
ladite partie femelle comprenant une tête de réception (12) d'une pointe de ladite partie mâle, et une coque rigide (11) contenant des moyens électroniques d'identification (42),
**caractérisé en ce qu'**une résine (41) est placée à l'intérieur d'un logement défini dans ladite coque, de façon à recouvrir lesdits moyens électroniques (42) et à solidariser ladite tête (12) et ladite coque (11).

2. Dispositif d'identification selon la revendication 1, **caractérisé en ce que** ladite partie femelle comprend également un élément de protection (13) s'étendant au moins sur une couronne centrée sur la base de ladite tête, et recouvrant ladite résine (41).

3. Dispositif d'identification selon la revendication 2, **caractérisé en ce que** ladite coque présente une surface inférieure (116, 117, 118), destinée à venir au moins partiellement en contact avec la peau de l'animal, et une surface supérieure, à partir de laquelle s'étend ladite tête, et un pourtour (114) reliant lesdites surfaces inférieure et supérieure, et **en ce que** ledit élément de protection recouvre ladite partie supérieure et ledit pourtour.

4. Dispositif d'identification selon la revendication 3, **caractérisé en ce que** la périphérie de ladite partie inférieure définit un pan coupé (115), qui est recouvert par ledit élément de protection.

5. Dispositif d'identification selon l'une quelconque des revendications 2 à 4, **caractérisé en ce que** ledit élément de protection (13) est réalisé en polyuréthane et porte un marquage d'identification dudit animal.

6. Dispositif d'identification selon l'une quelconque des revendications 1 à 5, **caractérisé en ce que** ladite tête porte au moins un élément (122) s'étendant sensiblement perpendiculairement à l'axe de pénétration de ladite partie mâle dans ladite tête, destinée à être noyé dans ladite résine.

7. Dispositif d'identification selon l'une quelconque des revendications 1 à 6, **caractérisé en ce que** la surface inférieure de ladite coque présente trois portions concentriques principales :
- une ouverture (111) permettant le passage d'une pointe d'une partie mâle vers ladite tête ;
- une première portion de surface (116) s'étendant autour de ladite ouverture, destinée à venir au moins partiellement en contact avec la peau de l'animal ;
- une deuxième portion de surface (117) s'étendant autour de la première surface, et éloignée de celle-ci de façon à ne pas venir en contact permanent avec la peau de l'animal.

8. Dispositif d'identification selon l'une quelconque des revendications 1 à 7, **caractérisé en ce que** ladite tête (13) est réalisée dans un matériau rigide, et de façon qu'elle casse en cas de tentative de séparation de la partie femelle et de la partie mâle.

9. Dispositif d'identification selon l'une quelconque des revendications 1 à 8, **caractérisé en ce que** ladite coque (11) est réalisée dans un matériau rigide.

10. Dispositif d'identification selon l'une quelconque des revendications 8 et 9, **caractérisé en ce que** ladite tête et/ou ladite coque sont réalisées dans des matériaux appartenant au groupe comprenant le polyamide, notamment le polyamide 66, et l'acrylonitrile styrène acrylate (ASA).

11. Dispositif d'identification selon l'une quelconque des revendications 1 à 10, **caractérisé en ce que** ladite tête présente au moins une ouverture d'aération (123).

12. Dispositif d'identification selon l'une quelconque des revendications 1 à 11, **caractérisé en ce que** la zone d'entrée de la pointe de la partie mâle, définie dans ladite coque, est un alésage comprenant une première portion tronconique, suivie d'une portion cylindrique.

13. Dispositif d'identification selon la revendication 12, **caractérisé en ce que** ladite partie mâle comprend une base (63) et un fût (62) perpendiculaire à ladite base, portant une pointe (61), l'angle défini par ladite pointe étant proche de, mais inférieur à, l'angle de ladite portion tronconique.

14. Dispositif d'identification selon l'une quelconque des revendications 1 à 13, **caractérisé en ce que** la longueur de ladite partie mâle est défini de façon à obtenir une côte libre disponible, pour l'oreille de l'animal, après assemblage de la partie mâle et de la partie femelle, de l'ordre de 10 à 13 mm.

15. Procédé de fabrication d'un dispositif selon l'une quelconque des revendications 1 à 14, **caractérisé en ce que** la fabrication de la partie femelle comprend les étapes suivantes :
- obtention de ladite coque (101) ;
- mise en place (102), sur ladite coque, de ladite tête ;
- mise en place (103), sur ladite coque, desdits moyens électroniques ;
- dépôt (104) de ladite résine, de façon à recouvrir lesdits moyens électroniques et solidariser ladite coque et ladite tête.

16. Procédé selon la revendication 15, **caractérisé en ce qu'**il comprend en outre une étape de :
- mise en place (105) d'une surface de protection sur la résine et/ou le pourtour de ladite coque.

## Patentansprüche

1. Vorrichtung zur Identifizierung eines Tiers, umfassend einen Einsteckteil und einen Aufnahmeteil, die dazu bestimmt sind, zusammengefügt zu werden,
wobei der Aufnahmeteil einen Aufnahmekopf (12) für eine Spitze des Einsteckteils und ein starres Gehäuse (11) umfasst, welches elektronische Identifizierungsmittel (42) enthält,
**dadurch gekennzeichnet, dass** ein Harz (41) im Inneren eines in dem Gehäuse definierten Sitzes angeordnet ist, um die elektronischen Mittel (42) zu bedecken und den Kopf (12) und die Schale (11) zu verbinden.

2. Identifizierungsvorrichtung nach Anspruch 1, **dadurch gekennzeichnet, dass** der Aufnahmeteil auch ein Schutzelement (13) umfasst, das sich zumindest auf einem auf der Basis des Kopfes zentrierten Kranz erstreckt und das Harz (41) bedeckt.

3. Identifizierungsvorrichtung nach Anspruch 2, **dadurch gekennzeichnet, dass** des Gehäuses eine untere Fläche (116, 117, 118), die dazu bestimmt ist, zumindest teilweise mit der Haut des Tiers in Kontakt zu kommen, und eine obere Fläche, von der aus sich der Kopf erstreckt, und einen Umfang (114) aufweist, der die untere und die obere Fläche verbindet, und dass das Schutzelement den oberen Teil und den Umfang bedeckt.

4. Identifizierungsvorrichtung nach Anspruch 3, **dadurch gekennzeichnet, dass** die Peripherie des unteren Teils eine Schnittfläche (115) definiert, die von dem Schutzelement bedeckt ist.

5. Identifizierungsvorrichtung nach einem der Ansprüche 2 bis 4, **dadurch gekennzeichnet, dass** das Schutzelement (13) aus Polyurethan hergestellt ist und eine Markierung zur Identifizierung des Tiers trägt.

6. Identifizierungsvorrichtung nach einem der Ansprüche 1 bis 5, **dadurch gekennzeichnet, dass** der Kopf mindestens ein Element (122) trägt, das sich im Wesentlichen senkrecht zu der Eindringachse des Einsteckteils in den Kopf, der dazu bestimmt ist, in das Harz eingelassen zu werden, erstreckt.

7. Identifizierungsvorrichtung nach einem der Ansprüche 1 bis 6, **dadurch gekennzeichnet, dass** die untere Fläche des Gehäuses drei konzentrische Hauptabschnitte aufweist:
- eine Öffnung (111), die den Durchgang einer Spitze eines Einsteckteils zum Kopf ermöglicht;
- einen ersten Flächenabschnitt (116), der sich um die Öffnung herum erstreckt und dazu bestimmt ist, zumindest teilweise mit der Haut des Tiers in Kontakt zu kommen;
- einen zweiten Flächenabschnitt (117), der sich um die erste Fläche herum erstreckt und von dieser entfernt ist, um mit der Haut des Tiers nicht in ständigem Kontakt zu sein.

8. Identifizierungsvorrichtung nach einem der Ansprüche 1 bis 7, **dadurch gekennzeichnet, dass** der Kopf (13) aus einem steifen Material sowie derart hergestellt ist, dass er bei einem Versuch, den Aufnahmeteil vom Einsteckteil zu trennen, zerbricht.

9. Identifizierungsvorrichtung nach einem der Ansprüche 1 bis 8, **dadurch gekennzeichnet, dass** das Gehäuse (11) aus einem steifen Material hergestellt ist.

10. Identifizierungsvorrichtung nach einem der Ansprüche 8 und 9, **dadurch gekennzeichnet, dass** der Kopf und/oder das Gehäuse aus Materialien hergestellt sind, die der Gruppe umfassend Polyamid, insbesondere Polyamid 66, und Acrylnitrilstyrolacrylat (ASA), angehören.

11. Identifizierungsvorrichtung nach einem der Ansprüche 1 bis 10, **dadurch gekennzeichnet, dass** der Kopf mindestens eine Belüftungsöffnung (123) aufweist.

12. Identifizierungsvorrichtung nach einem der Ansprüche 1 bis 11, **dadurch gekennzeichnet, dass** die Eingangszone der Spitze des Einsteckteils, die in dem Gehäuse definiert ist, eine Bohrung ist, umfassend einen ersten kegelstumpfartigen Abschnitt, gefolgt von einem zylindrischen Abschnitt.

13. Identifizierungsvorrichtung nach Anspruch 12, **dadurch gekennzeichnet, dass** der Einsteckteil eine Basis (63) und einen Schaft (62) senkrecht zu der Basis, der eine Spitze (61) trägt, umfasst, wobei der Winkel, der von der Spitze definiert wird, nahe dem Winkel des kegelstumpfartigen Abschnitts, aber kleiner als dieser ist.

14. Identifizierungsvorrichtung nach einem der Ansprüche 1 bis 13, **dadurch gekennzeichnet, dass** die Länge des Einsteckteils derart definiert ist, dass eine frei verfügbare Seite für das Ohr des Tiers nach der Zusammenfügung des Einsteckteils und des Aufnahmeteils von ungefähr 10 bis 13 mm erhalten wird.

15. Verfahren zur Herstellung einer Vorrichtung nach einem der Ansprüche 1 bis 14, **dadurch gekennzeichnet, dass** die Herstellung des Aufnahmeteils die folgenden Schritte umfasst:
- Erlangung des Gehäuses (101);
- Anbringen (102) des Kopfes auf dem Gehäuse;
- Anbringen (103) der elektronischen Mittel auf dem Gehäuse;
- Ablagern (104) des Harzes, um die elektronischen Mittel zu bedecken und das Gehäuse und den Kopf zu verbinden.

16. Verfahren nach Anspruch 15, **dadurch gekennzeichnet, dass** es ferner einen Schritt der:
- Anbringen (105) einer Schutzfläche auf dem Harz und/oder dem Umfang des Gehäuses umfasst.

## Claims

1. Device for identifying an animal, comprising a male part and a female part that are to be joined to each other,
said female part comprising a head for receiving (12) a tip of said male part and a rigid shell (11) containing electronic means for identifying (42),
**characterized in that** a resin (41) is placed inside a recess defined in said shell, so as to cover said electronic means (42) and fixedly join said head (12) and said shell (11).

2. Device for identifying according to claim 1, **characterized in that** said female part also comprises a protection element (13) extending on at least one crown centered on the base of said head, and covering said resin (41).

3. Device for identifying according to claim 2, **characterized in that** said shell has a lower surface (116, 117, 118) that is to come at least partially into contact with the animal's skin, and an upper surface, from which said head extends, and a rim (114) connecting said lower and upper surfaces, and **in that** said protection element covers said upper part and said rim.

4. Device for identifying according to claim 3, **characterized in that** the periphery of said lower part defines a cut facet (115) that is covered by said protection element.

5. Device for identifying according to any one of the claims 2 to 4, **characterized in that** said protection element (13) is made out of polyurethane and bears a marking for identifying said animal.

6. Device for identifying according to any one of the claims 1 to 5, **characterized in that** said head carries at least one element (122) extending appreciably perpendicularly to the axis of penetration of said male part into said head, that is to be buried in said resin.

7. Device for identifying according to any one of the claims 1 to 6, **characterized in that** the lower surface of said shell has three main concentric portions:
- an aperture (111) enabling the passage of a tip of a male part towards said head.
- a first surface portion (116) extending around said aperture, intended to come at least partially into contact with the animal' skin.
- a second surface (117) extending around the first surface, and at a distance from it so as not to come into permanent contact with the animal's skin.

8. Device for identifying according to any one of the claims 1 to 7, **characterized in that** said head (13) is made out of a rigid material, and in such a way that it breaks if there is an attempt to separate the female part and the male part.

9. Device for identifying according to any one of the claims 1 to 8, **characterized in that** said shell (11) is made out of a rigid material

10. Device for identifying according to any one of the claims 8 and 9, **characterized in that** said head and/or said shell are made out of materials belonging to the group comprising polyamide, especially polyamide 66, and acrylonitrile styrene acrylate (ASA).

11. Device for identifying according to any one of the claims 1 to 10, **characterized in that** said head has at least one airing aperture (123).

12. Device for identifying according to any one of the claims 1 to 11, **characterized in that** the inlet zone of the tip of the male part, defined in said shell, is a bore comprising a first truncated conical portion followed by a cylindrical portion.

13. Device for identifying according to claim 12, **characterized in that** said male part has a base (63) and a barrel (62) perpendicular to said base, bearing a tip, the angle defined by said tip being close to but smaller than the angle of said truncated conical portion.

14. Device for identifying according to any one of the claims 1 to 13, **characterized in that** the length of said male part is defined so as to obtain a free space available for the animal's ear, of the order of 10 to 13 mm after the male part and the female part have been joined together.

15. Method for manufacturing a device according to any one of the claims 1 to 14, **characterized in that** the manufacturing of the female part comprises the following steps:
- obtaining said shell (101);
- placing (102) said head on said shell;
- placing (103) said electronic means on said shell;
- depositing (104) said resin so as to cover said electronic means and fixedly join said shell and said head.

16. Method according to claim 15, **characterized in that** it further comprises a step for:
placing (105) a surface of protection on the resin and/or the rim of said shell.
